## Europäisches Patentamt

## European Patent Office

## Office européen des brevets

(19)

(11) Veröffentlichungsnummer: **0 019 117**
**B1**

(12) **EUROPÄISCHE PATENTSCHRIFT**

(45) Veröffentlichungstag der Patentschrift:
**20.03.85**

(51) Int. Cl.⁴: **B 65 G  47/76,** B 65 G  47/64,
B 07 C  5/36

(21) Anmeldenummer: **80102228.6**

(22) Anmeldetag: **25.04.80**

(54) Vorrichtung zum seitlichen Ablenken von Stückgut von einer ersten Bewegungsbahn auf eine zweite Bewegungsbahn.

(30) Priorität: **27.04.79  DE 2917286**

(43) Veröffentlichungstag der Anmeldung:
**26.11.80 Patentblatt 80/24**

(45) Bekanntmachung des Hinweises auf die Patenterteilung:
**20.03.85 Patentblatt 85/12**

(84) Benannte Vertragsstaaten:
**AT BE CH DE FR GB IT LI LU NL SE**

(56) Entgegenhaltungen:
**EP - A - 0 003 111**
**DE - A - 2 627 277**
**DE - A - 2 728 473**
**DE - C - 1 071 587**
**FR - A - 2 087 171**

(73) Patentinhaber: **Heuft, Bernhard, Im Sonnenwinkel 14,**
**D-5475 Burgbrohl (DE)**

(72) Erfinder: **Heuft, Bernhard, Im Sonnenwinkel 14,**
**D-5475 Burgbrohl (DE)**

(74) Vertreter: **Abitz, Walter, Dr.-Ing. et al, Abitz, Morf,**
**Gritschneder P.O. Box 86 01 09, D-8000 München 86 (DE)**

ACTORUM AG

## Beschreibung

Die Erfindung betrifft eine Vorrichtung zum seitlichen Ablenken von bestimmten, nach einem Merkmal ausgewählten Gegenständen von einer ersten Bewegungsbahn auf eine zweite Bewegungsbahn der abgelenkten Gegenstände. Durch eine Ablenkeinrichtung, die im wesentlichen quer zur Bewegungsrichtung der Gegenstände aus- und einfahrbar ist, wird jeder abzulenkende Gegenstand um weniger als die Gesamtablenkung abgelenkt. Die Angriffsfläche der Ablenkeinrichtung ist in Abhängigkeit von der Fördergeschwindigkeit und der Gesamtablenkung in einem solchen Winkel zur ersten Bewegungsbahn angeordnet, dass ein abzulenkender Gegenstand eine solche Geschwindigkeitskomponente quer zur Transportrichtung erhält, dass er sich aufgrund seiner Massenträgheit bis zur zweiten Bewegungsbahn bewegt.

Bei einer derartigen, aus der DE-A-2 728 473 bekannten Vorrichtung besteht die Ablenkeinrichtung aus einer an ihrem hinteren Ende angelenkten Klappe, die in die erste Bewegungsbahn hineingeschwenkt wird. Die Arbeitsgeschwindigkeit einer derartigen Vorrichtung ist dadurch begrenzt, dass der Abstand zweier aufeinanderfolgender Gegenstände mindestens gleich der Länge der Ablenkklappe sein muss. Insbesondere bei hohen Transportgeschwindigkeiten ist eine gewisse Mindestlänge der Klappe erforderlich, damit der Winkel der Angriffsfläche der Ablenkplatte zur ersten Bewegungsbahn nicht so gross wird, dass die Gefahr eines Umkippens der abzulenkenden Gegenstände besteht.

Aus der DE-A-2 627 277 ist eine ähnliche Vorrichtung bekannt, bei der durch eine stetige Verstellung des Winkels der Ablenkklappe eine Verteilung der Gegenstände auf mehrere zweite Bewegungsbahnen erreicht wird. Die Gegenstände folgen hier zwar in einem relativ geringen Abstand aufeinander, jedoch ist eine selektive Ablenkung der einzelnen Gegenstände dadurch nicht möglich.

Aus der älteren, nachveröffentlichten EP-A1-0 003 111 ist es bekannt, eine Ablenkeinrichtung in eine Mehrzahl von Ablenkelementen zu unterteilen, wobei zu jedem Zeitpunkt nur diejenigen Ablenkelemente ausgefahren werden, die zu diesem Zeitpunkt oder unmittelbar danach zum Ablenken eines Gegenstandes benötigt werden. Die Ablenkelemente überspannen dabei die gesamte Breite der ersten Bewegungsbahn, so dass die Gegenstände über die gesamte Ablenkkurve geführt werden. Die Arbeitsgeschwindigkeit einer solchen Vorrichtung ist durch die Schnelligkeit begrenzt, mit der insbesondere die letzten Ablenkelemente ein- und ausgefahren werden können.

Durch die im Patentanspruch 1 angegebene Erfindung wird die Aufgabe gelöst, eine Vorrichtung zum selektiven seitlichen Ablenken von Gegenständen von einer ersten Bewegungsbahn auf eine zweite Bewegungsbahn zu schaffen, die eine besonders hohe Arbeitsgeschwindigkeit besitzt und eine besonders hohe Fördergeschwindigkeit der Gegenstände zulässt.

Bevorzugte Ausgestaltungen der Erfindung sind Gegenstand der Unteransprüche.

Die durch die vorderen Enden der Ablenkelemente gebildete Angriffsfläche kann gekrümmt sein, so dass ein abzulenkender Gegenstand auf einer gekrümmten Bahn zur zweiten Bewegungsbahn hin abgelenkt wird. Durch die Krümmung der Ablenk- oder Angriffsfläche wird dabei erreicht, dass die Geschwindigkeitskomponente quer zur Förderrichtung durch jedes Ablenkelement um einen bestimmten Betrag erhöht wird. Für die endgültig erreichte Geschwindigkeitskomponente quer zur Transportrichtung ist dabei der Winkel entscheidend, den die Angriffsfläche des letzten Ablenkelements zur Bewegungsrichtung besitzt.

Die Geschwindigkeitskomponente eines abzulenkenden Gegenstandes quer zur Transportrichtung muss hoch genug sein, damit er aufgrund seiner Massenträgheit die zweite Bewegungsbahn erreicht (Gesamtablenkung). Die für diese Geschwindigkeitskomponente wesentlichen Faktoren sind dabei die Fördergeschwindigkeit und die Grösse des Winkels der Angriffsfläche zur ersten Bewegungsbahn. Der in einem konkreten Fall zu wählende Winkel der Angriffsfläche hängt damit von der Fördergeschwindigkeit und der Gesamtablenkung ab.

Die Vorrichtung kann zusätzlich Blas- oder Saugdüsen aufweisen, die in Förderrichtung nach den Ablenkelementen angeordnet sind und die Ablenkung eines Gegenstandes in dem Bereich unterstützen, indem sich der Gegenstand aufgrund seiner Massenträgheit bewegt.

Die durch die Erfindung erzielbaren Vorteile bestehen insbesondere darin, dass sich die von den Ablenkelementen gebildete Ablenkfläche um so weniger quer über die erste Fördereinrichtung erstreckt, je höher die Fördergeschwindigkeit ist. Überraschend ist dabei insbesondere, dass man auch bei hohen Geschwindigkeiten labilen Gegenständen unterschiedlichen Gewichts und mit unterschiedlicher Höhe des Schwerpunktes eine genau definierte Querbeschleunigung erteilen kann, ohne sie umzuwerfen. Somit ist die Stabilität dieser Gegenstände nach dem Verlassen der Ablenkvorrichtung nur von den Gleiteigenschaften der Transporteinrichtungen abhängig. Infolge der kürzeren Stellzeiten ist sogar insgesamt eine höhere Arbeitsgeschwindigkeit bzw. Sicherheit im Vergleich zu Ablenkvorrichtungen gegeben, bei denen die Gegenstände während des gesamten Ablenkvorgangs durch eine Ablenkfläche geführt werden.

Ausführungsbeispiele der Erfindung werden nachfolgend anhand der Zeichnung erläutert. Es zeigen:

Fig. 1 in Draufsicht eine Ablenkvorrichtung mit mehreren Ablenkeinrichtungen in Form von Elementen;

Fig. 2 in Draufsicht eine Ablenkvorrichtung, bei der die ersten drei Ablenkeinrichtungen ausfahrbare Elemente sind, während die letzten fünf Ablenkeinrichtungen Blasdüsen sind;

Fig. 3 eine Ablenkvorrichtung, bei der das Stückgut entweder auf der ersten Transporteinrichtung verbleibt oder auf mehrere zweite Transporteinrichtungen verteilt wird;

Fig. 4 in Draufsicht eine Ablenkvorrichtung, bei der das Stückgut in jedem Fall auf eine von mehreren zweiten Transporteinrichtungen verteilt wird.

Die in den Figuren gezeigten Ablenkvorrichtungen besitzen eine erste Transporteinrichtung 12 und eine oder mehrere zweite Transporteinrichtungen 14, wobei Stückgut 10, zum Beispiel Flaschen, Kisten oder andere Gegenstände, von der ersten Transporteinrichtung 12 durch Elemente 18n (n steht für a, b, c...) auf die zweite Transporteinrichtung 14 oder eine der zweiten Transporteinrichtungen 14 abgelenkt oder übergeführt wird. Die abzulenkenden Gegenstände werden durch eine nicht gezeigte Prüfeinrichtung ausgewählt, um zum Beispiel nicht vollständig gefüllte oder nicht ordnungsgemäss verschlossene Flaschen auszusondern. Um zu verhindern, dass die Gegenstände von den Transporteinrichtungen herunterfallen, können Geländer 15, 16, 17 vorgesehen sein.

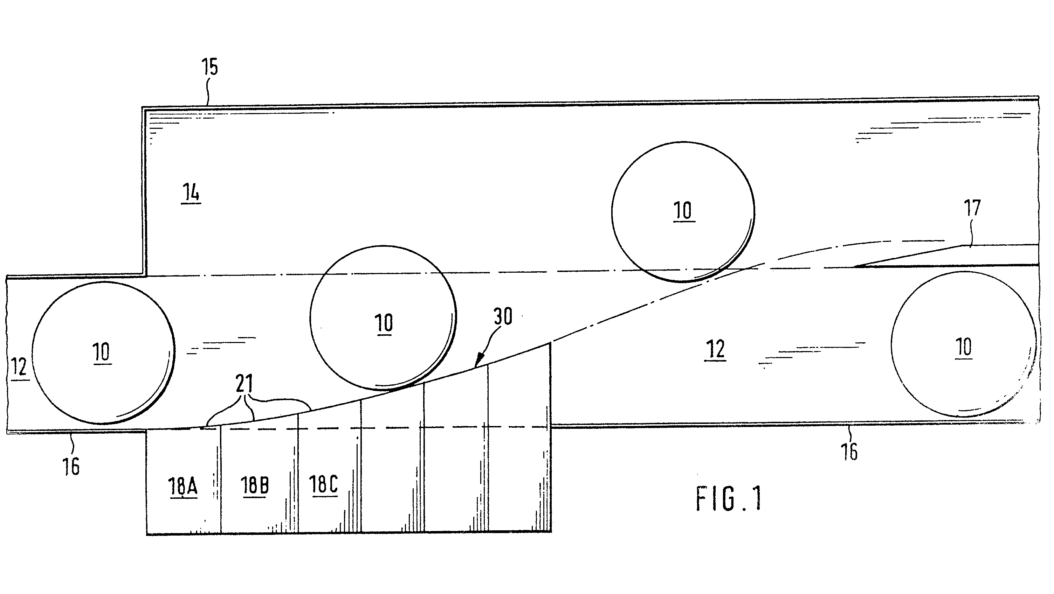

Bei der in Fig. 17 gezeigten Ausführungsform sind die Ablenkeinrichtungen ausschliesslich ausfahrbare Ablenkelemente 18n. Die Frontflächen 21 der Ablenkelemente 18n sind abgeschrägt und bilden im ausgefahrenen Zustand der Ablenkelemente eine glatte Ablenkfläche 30. Vorzugsweise nimmt die Abschrägung dieser Frontflächen 21 in Förderrichtung zu. Im Idealfall nimmt die Abschrägung der Frontflächen 21 in der Weise zu, dass die Ablenkfläche 30 parabolisch gekrümmt ist. Durch eine parabolisch gekrümmte Ablenkfläche 30 wird erreicht, dass die Geschwindigkeitskomponente eines abzulenkenden Gegenstandes quer zur Förderrichtung durch jedes Ablenkelement 18n um den gleichen Betrag erhöht wird, das heisst, ein abzulenkender Gegenstand wird durch die Elemente 18a gleichförmig in Richtung der zweiten Fördereinrichtung 14 beschleunigt. Beim Verlassen des letzten ausgefahrenen Ablenkelementes, das in Fig. 1 mit 18e bezeichnet ist, beträgt die Geschwindigkeitskomponente quer zur Förderrichtung etwa die Fördergeschwindigkeit der ersten Transporteinrichtung x sin α, wobei α der Winkel der Abschrägung der Frontfläche 21 des letzten Ablenkelementes ist. Man erkennt daraus, dass die Geschwindigkeitskomponente quer zur Förderrichtung proportional zur Förder- oder Transportgeschwindigkeit ist. Diese Geschwindigkeitskomponente muss hoch genug sein, damit ein abzulenkender Gegenstand aufgrund seiner Massenträgheit die zweite Transporteinrichtung 14 erreicht. Da die Gegenstände somit einen Teil der Strecke von der ersten Transporteinrichtung 12 auf die zweite Transporteinrichtung 14 aufgrund ihrer Massenträgheit ohne Führung zurücklegen können, müssen die Gegenstände durch die Ablenkfläche 30 nicht bis zur zweiten Transporteinrichtung 14 geführt werden, sondern genügt es, wenn die Gegenstände durch die Ablenkfläche 30 nur während zum Beispiel der ersten Hälfte des Weges von der ersten Transporteinrichtung 12 zur zweiten Transporteinrichtung 14 geführt werden und dabei so stark in Querrichtung beschleunigt werden, dass sie die zweite Hälfte dieses Weges aufgrund der ihnen erteilten, quer zur Förderrichtung zeigenden Geschwindigkeitskomponente zurücklegen. Während der zweiten Hälfte des Weges wird diese Geschwindigkeitskomponente der Gegenstände durch die Reibung zwischen der Unterseite der Gegenstände und dem Belag der Transporteinrichtungen abgebremst.

Je höher die Transportgeschwindigkeit ist, desto kleiner kann der Winkel α der Abschrägung des letzten Ablenkelementes sein, das heisst desto weniger Ablenkelemente sind notwendig, um eine gegebene Geschwindigkeitskomponente quer zur Förderrichtung zu erzielen. Bei sehr hohen Geschwindigkeiten genügt es daher unter Umständen, wenn die Gegenstände nur während des ersten Drittels des Weges von der ersten Transporteinrichtung auf die zweite Transporteinrichtung durch die Ablenkfläche 30 geführt werden und die letzten zwei Drittel dieses Weges frei zurücklegen. Umgekehrt kann es bei relativ niedrigen Transportgeschwindigkeiten erforderlich sein, dass die Ablenkfläche 30 so lang ist, dass sie die Gegenstände auf zwei Drittel oder drei Viertel dieses Weges führt.

Die Breite der Ablenkelemente 18n kann kleiner sein als die Abmessung des Stückgutes in Transportrichtung, zum Beispiel des Durchmessers von Flaschen. Vorzugsweise beträgt diese Breite ½ oder $\frac{1}{3}$ der Abmessung der Gegenstände in Transportrichtung. Die Länge der Ablenkfläche 30, das heisst die Strecke vom Anfang des ersten Ablenkelementes bis zum Ende des letzten Ablenkelementes kann grösser sein als die Abmessung des Stückgutes in Transportrichtung und dennoch können die Gegenstände einzeln abgelenkt werden, auch wenn sie unmittelbar aufeinanderfolgen. Dies wird dadurch erreicht, dass nicht alle Ablenkelemente gleichzeitig aus- bzw. eingefahren werden, sondern zu jedem Zeitpunkt nur diejenigen Ablenkelemente ausgefahren sind, die zu diesem Zeitpunkt oder unmittelbar danach zum Ablenken des Gegenstandes tatsächlich benötigt werden, das heisst diesen Gegenstand berühren. Geeignete Steuerungssysteme mit zwei Lichtschranken für jedes Element, die den Einfahrbefehl bzw. den Ausfahrbefehl für das betreffende Segment geben, oder mit einer einzigen Lichtschranke am Anfang der Ablenkfläche 30, wobei der Zeitpunkt des Ausfahrens und Einfahrens jedes Ablenkelementes aus dessen Abstand von der Lichtschranke und der Transportgeschwindigkeit berechnet wird, sind in der europäischen Patentanmeldung EP-A1-0 003 111 beschrieben. In dieser Patentanmeldung ist auch der Aufbau und der Ausfahrmechanismus der Elemente im Detail beschrieben.

Bei Transporteinrichtungen für Getränkeflaschen, wie sie zum Beispiel in Getränkeabfüllanlagen und Flaschenreinigungsanlagen verwendet werden, kann die vorliegende Erfindung bei Transportgeschwindigkeiten oberhalb etwa 0,8 m/sec angewendet werden. Eine geeignete Transportgeschwindigkeit ist zum Beispiel 1,5 m/sec. Ist die Transportgeschwindigkeit zu klein, so ist es möglich, die Gegenstände auf eine Transporteinrichtung mit genügend hoher Geschwindigkeit überzuführen.

Bei der in Fig. 1 gezeigten Ablenkvorrichtung erfolgt die Anpassung an unterschiedliche Geschwindigkeiten der ersten Transporteinrichtung dadurch, dass die Anzahl der verwendeten Ablenkelemente 18n verändert wird, das heisst bei sehr niedrigen Transportgeschwindigkeiten werden alle Ablenkelemente eingesetzt, während bei sehr hohen Transportgeschwindigkeiten, zum Beispiel bereits durch drei von insgesamt sechs Ablenkelementen, eine ausreichende Geschwindigkeitskomponente quer zur Transportrichtung erreicht ist, so dass die letzten drei Ablenkelemente nicht mehr ausgefahren zu werden brauchen. Bei einer aus neun Elementen aufgebauten Ablenkvorrichtung kann die Steuerung zum Beispiel so ausgebildet sein, dass bei einer Transportgeschwindigkeit von mehr als 70 cm/sec das neunte Element nicht mehr ausfährt, dass bei einer Transportgeschwindigkeit von mehr als 85 cm/sec das achte Element nicht mehr ausfährt usw., bis bei einer Transportgeschwindigkeit von ca. 1,5 m/sec nur noch die ersten drei Elemente ausfahren. Im Vorausgehenden ist dabei von einer Segmentbreite von etwa 2 cm ausgegangen. Durch die Verringerung der Elemente bei höheren Transportgeschwindigkeiten ergibt sich der Vorteil, dass bei hohen Transportgeschwindigkeiten gerade die letzten Elemente, die die grössten Ausfahrwege und längsten Ausfahrzeiten besitzen, nicht mehr ausgefahren werden, wodurch der Arbeitsgeschwindigkeit der Ablenkvorrichtung von der Stellzeit der Elemente her betrachtet keine obere Grenze gesetzt ist.

Bei der Ablenkvorrichtung, wie sie in den Fig. 5 und 6 der obengenannten Patentanmeldungen EP-A1-0 003 111 gezeigt ist, das heisst bei Ablenkvorrichtungen, bei denen die Elemente nicht geradlinig ausgefahren werden, sondern um eine Achse verschwenkt werden, kann die Ausfahrweite, das heisst der Drehwinkel der Elemente, durch eine Anschlagsleiste, die über einen Stellmotor verschiebbar ist, der Grösse der Transportgeschwindigkeit angepasst werden, wobei der Drehwinkel umso kleiner ist, je höher die Transportgeschwindigkeit ist. Zweckmässigerweise wird das erste Element als ein Federstreifen ausgebildet, der an seiner Spitze fest mit dem Geländer verbunden ist, so dass stets ein glatter Übergang zur Ablenkebene entsteht. Auch hierbei ergibt sich wiederum bei höheren Transportgeschwindigkeiten eine kürzere Stellzeit der Segmente.

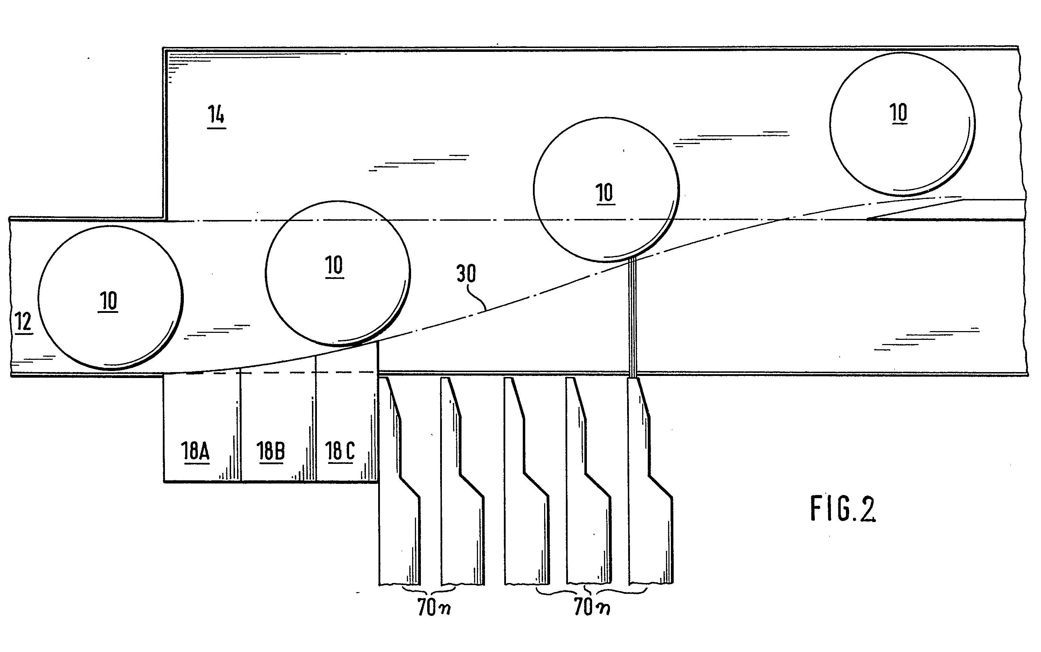

Bei der Ablenkvorrichtung nach Fig. 2 ist ein Teil der Ablenkeinrichtungen als verschieb- oder verschwenkbare Elemente 18n und ein Teil der Ablenkeinrichtungen als Blasdüsen 70n ausgebildet. Die ausfahrbaren oder verschwenkbaren Segmente 18n bilden dabei die ersten Ablenkeinrichtungen, während die Blasdüsen 70n die letzten Ablenkeinrichtungen bilden. Es ergibt sich dabei der Vorteil, dass der Verbrauch an Druckgas und Energie wesentlich gegenüber einer Ablenkvorrichtung vermindert werden kann, bei der alle Ablenkeinrichtungen als Blasdüsen ausgebildet sind, da die Haftreibung der Gegenstände gegenüber der ersten Transporteinrichtung nicht durch Gasstrahlen, sondern durch die ausfahrbaren Elemente 18n überwunden wird. Durch die Blasdüsen 70n muss dann nur noch die gleitende Reibung der Gegenstände 10 auf der ersten oder zweiten Transporteinrichtung kompensiert werden. Bei sehr geringen Abständen zwischen den Gegenständen und bei sehr hohen Transportgeschwindigkeiten werden zur Überwindung der Haftreibung vorzugsweise etwa zwei bis vier Ablenkelemente eingesetzt, auf die dann mehrere Blasdüsen 70n folgen. Statt der Blasdüsen 70n können auch die in der obengenannten Patentanmeldung EP-A1-0 003 111 beschriebenen Saugdüsen verwendet werden.

Eine weitere Ausführungsform ergibt sich dadurch, dass vor den Ablenkelementen 18n ein relativ kleiner Ablenkkeil fest eingebaut ist, der allen Gegenständen eine kleine Geschwindigkeitskomponente quer zur Transportrichtung erteilt, wobei die abzulenkenden Gegenstände durch die nachfolgenden Ablenkelemente bzw. Blasdüsen weiter abgelenkt werden, während die nicht abzulenkenden Gegenstände, die auf der ersten Transporteinrichtung verbleiben sollen, geringfügig versetzt auf der ersten Transporteinrichtung weitergefördert werden.

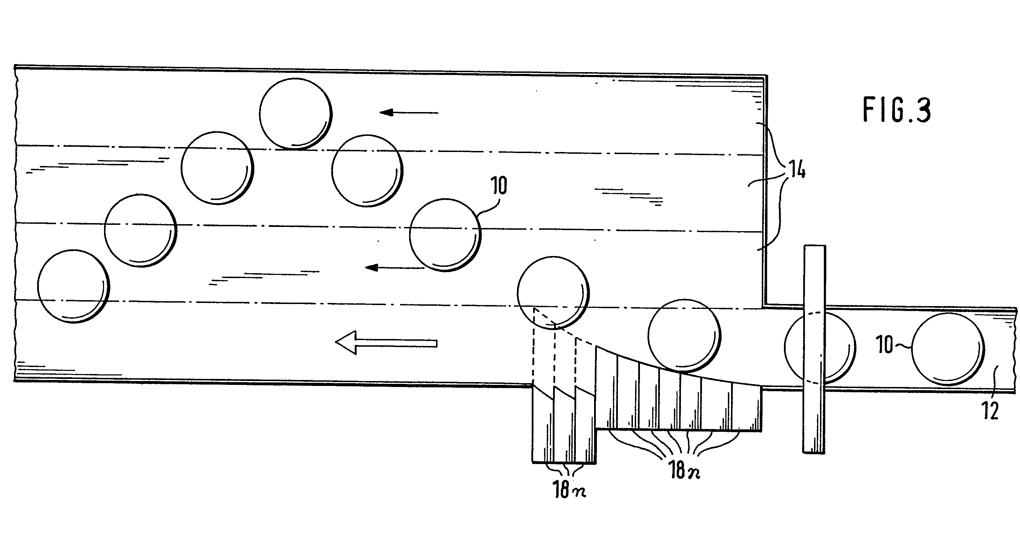

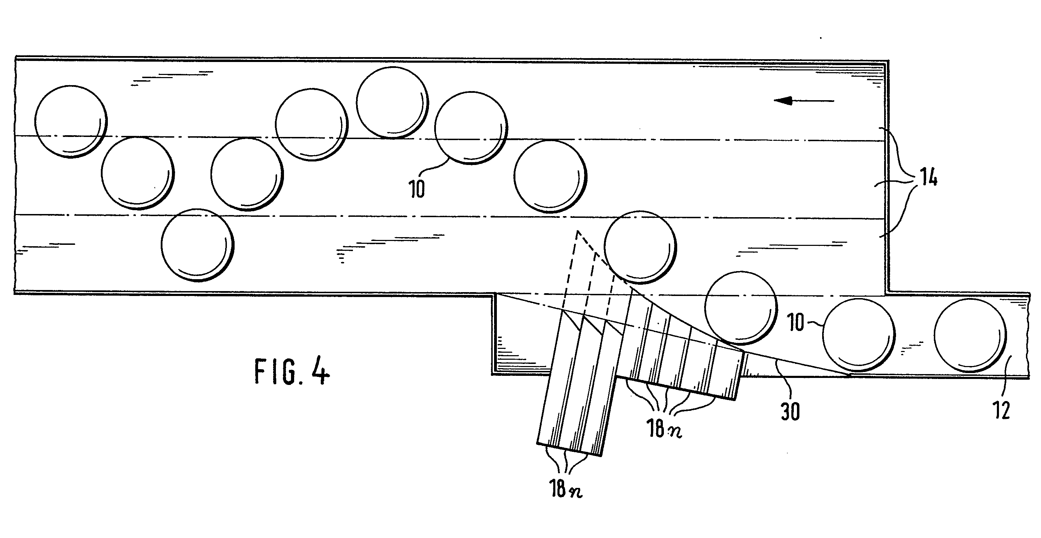

Die Fig. 3 und 4 zeigen Ausführungsformen mit mehreren zweiten Transporteinrichtungen 14. Den Gegenständen 10 wird durch die Ablenkvorrichtung 11 eine unterschiedliche Geschwindigkeitskomponente quer zur Transportrichtung erteilt. Werden alle Ablenkelemente 18n zum Ablenken eines bestimmten Gegenstandes 10 eingesetzt, so wird ihm eine sehr grosse Geschwindigkeitskomponente erteilt, das heisst er wird auf eine zweite Transporteinrichtung 14 abgelenkt, die einen relativ grossen Abstand von der ersten Transporteinrichtung 12 besitzt. Im umgekehrten Fall wird bei dem Einsatz von zum Beispiel nur sieben von insgesamt zehn in Fig. 3 dargestellten Ablenkelementen dem Gegenstand nur eine solche Geschwindigkeitskomponente erteilt, dass er auf eine weniger weit entfernt liegende zweite Transporteinrichtung 14 abgelenkt oder geschleudert wird.

Es ergibt sich dadurch eine weitere Anwendungsmöglichkeit für die erfindungsgemässe Ablenkvorrichtung. Bei Abfüllstrassen für Flaschen sind zwischen den einzelnen Anlagen, zum Beispiel der Abfüllanlage und der Etikettieranlage oder zwischen der Etikettieranlage und der Einpackanlage, sogenannte Pufferstrecken angeordnet, auf denen die Flaschen auf mehreren parallelen Transporteinrichtungen befördert werden und sich gegebenenfalls stauen, wenn die Arbeitsgeschwindigkeit der einzelnen Anlagen unterschiedlich ist, oder eine Anlage kurzzeitig ausfällt. Die in den Fig. 3 und 4 gezeigten mehreren zweiten Transporteinrichtungen 14 bilden eine derartige Pufferstrecke. Die erfindungsgemässe Ablenkvorrichtung kann nun dazu verwendet werden, die Flaschen von der relativ schnellen ersten Transporteinrichtung 12 gleichmässig auf mehrere langsame zweite Transporteinrichtungen 14 zu verteilen. In Fig. 3 sind drei zweite Transporteinrichtungen 14 gezeigt, wobei eine Flasche auf eine dieser zweiten Transporteinrichtungen abgelenkt wird, je nachdem, ob zu ihrer Ablenkung zum Beispiel vier, sechs oder acht Ablenkelemente eingesetzt werden. Verringert sich die Arbeitsgeschwindigkeit der Anlage, von der die erste Transporteinrichtung 12 die Flaschen wegführt, so verringert sich gleichzeitig auch der Betrag, um den die Flaschen durch die in Fig. 3 gezeigte Ablenkvorrichtung abgelenkt werden, so dass die Flaschen dann zum Beispiel nur noch auf die beiden zweiten Transporteinrichtungen verteilt werden, die der ersten Transporteinrichtung 12 unmittelbar benachbart sind. Wenn sich der Flaschenstau aufgelöst hat und die beiden durch die erste Transporteinrichtung 12 verbundenen Anlagen mit gleicher Arbeitsgeschwindigkeit arbeiten, so wird die in Fig. 3 gezeigte Ablenkvorrichtung 11 nicht betätigt und verbleiben die Flaschen auf der ersten Transporteinrichtung 12.

Bei der in Fig. 4 gezeigten Ausführungsform verlassen die Flaschen in jedem Fall die erste Transporteinrichtung 12. Im festen Seitengeländer 16 beginnt daher bereits die Ablenkfläche 30, an die sich eine schräggestellte Ablenkvorrichtung 11 anschliesst. Es ergeben sich dadurch besonders kurze Ausfahrwege und damit eine hohe Arbeitsgeschwindigkeit.

Ein besonderer Vorteil der in den Fig. 3 und 4 gezeigten Pufferstrecken besteht darin, dass die Flaschen sich nicht unter gegenseitiger Berührung stauen, wodurch derartige Pufferstrecken in der Vergangenheit sehr lärmintensiv waren.

Besitzen die Flaschen auf einer schnell laufenden Transporteinrichtung einen fest definierten Abstand, so können die einzelnen Ablenkelemente statt durch Pneumatik-Zylinder durch eine Nockenwelle, die synchron mit der Transporteinrichtung läuft, aus- und eingefahren werden.

Bei der vorliegenden Erfindung handelt es sich um eine Weiterentwicklung des Gegenstandes der europäischen Patentanmeldung EP-A1-0 003 111, auf sie wird daher ausdrücklich Bezug genommen, und in der vorliegenden Anmeldung sind nur diejenigen Merkmale erläutert, in denen die vorliegende Anmeldung abweicht.

**Patentansprüche**

1. Vorrichtung zum seitlichen Ablenken von bestimmten, nach einem Merkmal ausgewählten Gegenständen (10) von einer ersten Bewegungsbahn (12) auf eine zweite Bewegungsbahn (14) der abgelenkten Gegenstände, mit einer Ablenkeinrichtung in Form eines Ablenkkeils, der in Richtung der Bewegung der abzulenkenden Gegenstände ortsfest ist, im wesentlichen quer dazu jedoch aus- und einfahrbar ist, wobei ein abzulenkender Gegenstand nach Verlassen der Ablenkeinrichtung um weniger als die Gesamtablenkung abgelenkt worden ist und die Angriffsfläche des Ablenkkeils in Abhängigkeit von der Fördergeschwindigkeit und der Gesamtablenkung in einem solchen Winkel zur Bewegungsrichtung der ersten Bewegungsbahn angeordnet ist, dass ein abzulenkender Gegenstand eine solche Geschwindigkeitskomponente quer zur Transportrichtung besitzt, dass er sich aufgrund seiner Massenträgheit bis zur zweiten Bewegungsbahn bewegt, dadurch gekennzeichnet, dass der Ablenkkeil in eine Mehrzahl von Ablenkelementen (18n) unterteilt ist und dass zu jedem Zeitpunkt nur diejenigen Ablenkelemente ausgefahren sind, die zu diesem Zeitpunkt oder unmittelbar danach zum Ablenken des Gegenstandes benötigt werden.

2. Vorrichtung nach Anspruch 1, dadurch gekennzeichnet, dass die in Förderrichtung gesehen ersten Ablenkeinrichtungen mechanische Ablenkelemente (18a, 18b) sind und die letzten Ablenkeinrichtungen Blasdüsen (70n) oder Saugdüsen sind.

3. Vorrichtung nach Anspruch 1 oder 2, dadurch gekennzeichnet, dass die zweite Bewegungsbahn aus mehreren zweiten Transporteinrichtungen (14) besteht und die Anzahl der Ablenkelemente und/oder deren Ausfahrweite bzw. die Intensität der Blas- bzw. Saugdüsen derart gesteuert werden, dass die Gegenstände unterschiedliche Geschwindigkeitskomponenten quer zur Förderrichtung erhalten und dadurch auf unterschiedliche der zweiten Transporteinrichtungen (14) abgelenkt werden.

4. Vorrichtung nach einem der Ansprüche 1 bis 3, dadurch gekennzeichnet, dass vor dem ersten Ablenkelement (18a) ein relativ kleiner Ablenkkeil fest angeordnet ist.

**Claims**

1. Apparatus for laterally deflecting specific articles (10) selected according to a criterion from a first path of travel (12) to a second path of travel (14) of the deflected articles, comprising a deflecting means in the form of a deflecting wedge stationary in the direction of travel of the articles to be deflected, while being extensible and retractable substantially in transverse direction thereof, an article to be deflected having been deflected less than the total deflection after having left the deflecting means and with the working face of the deflecting wedge being arranged, depending on the velocity of travel and the total deflection, at such an angle with respect to the direction of travel along the first path of travel that an article to be deflected, after having left the last deflecting means, has a velocity component transversely of the conveying direction such that it continues moving to the second path of travel owing to its inertia, characterized in that the deflecting wedge is divided into a plurality of deflecting elements (18n) and in that, at each point in time only those deflecting elements are extended which are needed for deflecting the article at that point in time or immediately thereafter.

2. Apparatus according to claim 1 characterized in that, viewed in the direction of travel, the first deflecting means are mechanical deflecting elements (18a, 18b) and the last deflecting means are blowing nozzles (70n) or sucking nozzles.

3. Apparatus according to claim 1 or 2 characterized in that the second path of travel consists of a plurality of second conveyors (14), and the number of deflecting means and/or the extent of their extension or, respectively, the intensity of the blowing or sucking nozzles are controlled such that different velocity components are imparted to the articles transversely of their direction of conveyance to thereby deflect them to different ones of the second conveyors (14).

4. Apparatus according to anyone of claims 1 to 3, characterized in that a relatively small deflecting wedge is fixedly mounted upstream of the first deflecting element (18a).

## Revendications

1. Dispositif pour la déviation latérale de certains objets 10, sélectionnés selon une caractéristique, d'une première voie de transport 11 sur une deuxième voie de transport 14 des objets déviés, avec un organe de déviation se présentant sous la forme d'un coin de déviation, qui est fixe dans la direction du transport des objets à dévier, où un objet à dévier, après avoir quitté l'organe de déviation, est dévié sur moins que la déviation totale, et la surface d'attaque du coin de déviation est disposée, selon la vitesse de transport et la déviation totale, en faisant un angle avec la direction de transport de la première voie de transport, tel qu'un objet à dévier présente transversalement à la direction de transport une composante de vitesse telle qu'il se déplace, du fait de son inertie de masse, jusqu'à la deuxième voie de transport, caractérisé en ce que le coin de déviation est subdivisé en un grand nombre d'éléments de déviation 18n, et que, à tout instant, seuls coulissent les éléments de déviation qui, à cet instant là ou immédiatement après, sont nécessaires à la déviation de l'objet.

2. Dispositif selon la revendication 1, caractérisé en ce que les premiers organes de déviation, vus dans la direction du transport, sont des éléments de déviation mécaniques 18a, 18b, et que les derniers organes de déviation sont des buses soufflantes 70n ou des buses aspirantes.

3. Dispositif selon la revendication 1 ou 2, caractérisé en ce que la deuxième voie de transport est constituée de plusieurs deuxièmes dispositifs de transport 14, et que le nombre des éléments de déviation, et/ou leur distance de coulissement ou l'intensité des buses soufflantes ou des buses aspirantes sont commandées de telle sorte que les objets reçoivent, transversalement à la direction du transport, des composantes de vitesse différentes, ce en conséquence de quoi ils sont déviés sur différents deuxièmes dispositifs de transport 14.

4. Dispositif selon l'une des revendications 1 à 3, caractérisé en ce qu'un point de déviation relativement petit est fixé à demeure avant le premier élément de déviation 18a.

FIG.1

0 019 117

FIG.2

FIG.3

0 019 117

0 019 117

FIG. 4

10

14

13

10

30

12

18 n

18 n